**Europäisches Patentamt**

**European Patent Office**

**Office européen des brevets**

(19)

(11) Publication number : **0 328 402 B1**

# (12) EUROPEAN PATENT SPECIFICATION

(45) Date of publication of patent specification :
24.06.92 Bulletin 92/26

(51) Int. Cl.⁵ : **A01K 97/12**

(21) Application number : **89301287.2**

(22) Date of filing : **10.02.89**

(54) **Bite indicator.**

(30) Priority : **10.02.88 GB 8803051**

(43) Date of publication of application :
**16.08.89 Bulletin 89/33**

(45) Publication of the grant of the patent :
**24.06.92 Bulletin 92/26**

(84) Designated Contracting States :
**BE DE FR GB NL**

(56) References cited :
FR-A- 1 262 114
FR-A- 2 526 270
GB-A- 2 191 372
US-A- 3 878 635

(73) Proprietor : **Sams, Pearl Audrey**
**1 Tina Gardens**
**Broadstairs Kent, CT10 1BJ (GB)**
Proprietor : **Sams, Frank Edward John**
**1 Tina Gardens**
**Broadstairs Kent, CT10 1BJ (GB)**
Proprietor : **Blythe, Donald John**
**38 Mellon Charles Ault Bea**
**Wester Ross Scotland (GB)**

(72) Inventor : **Sams, Frank John Edward**
**1 Tina Gardens**
**Broadstairs Kent CT10 1BJ (GB)**

(74) Representative : **Charlton, Peter John et al**
**Elkington and Fife Prospect House 8**
**Pembroke Road**
**Sevenoaks, Kent TN13 1XR (GB)**

EP 0 328 402 B1

## Description

The present invention relates to a bite indicator in particular a rod-mounted indicator.

GB-A-2191372 disclosed a bite indicator which is capable of being mounted on a fishing rod. The indicator in use comprises a wheel whose axis of rotation is transverse to the rod and around which a fishing line partially passes. Rotation of the wheel and hence line movement is detected by an infra-red sensor.

US-A-3878635 disclosed a bite indicator which is capable of being mounted on a fishing rod. In use, the line is directed around a pulley system which is capable of rotation around a central axis. The pulley system comprises two rotatable members. In use, the line is diverted to partially pass around both rotatable members. The indicator comprises a magnetic switch assembly which includes a magnet located in the pulley system. Variation in line tension causes rotation of the line system about its central axis, which varies the magnetic field within the magnetic switch assembly, activating the indicator.

Diversion of the line around wheel members is necessary for bite detection, but is extremely inconvenient as far as casting is concerned. The problem is that of allowing the line to run freely when casting is required.

According to the present invention there is provided a bite indicator which is capable of being mounted on a fishing rod, the indicator comprising at least one rotatable member whose axis of rotation is, in use, transverse to the rod and around which, in use, a fishing line at least partially passes, a switch operably connected to the rotatable member and an indicator which can be activated by the switch, movement of the line causing rotation of the rotatable member which rotation operates the switch which in turn activates the indicator to indicate the existence of a bite, characterised in that there are at least two rotatable members and in that at least one of said rotatable members is movable between the position in which the line passes at least partially around the rotatatable members and a position in which the line can run freely through the indicator in order to allow ease of casting.

The switch may be a reed switch and the indicator is preferably an optical indicator, for example including at least one LED.

The rotatable members may have their axes of rotation either horizontal or vertical (assuming the bite indicator is mounted below the rod which itself is generally horizontal). In the former case, a pivotable arm including one rotatable member at its end diverts the line around two other rotatable members when the rod is at rest, awaiting a bite, but pivots out of the way when the bait is to be cast out again. In the latter case, a pair of rotatable members is pivotable so that each roller can assume a position to the side of the line when casting is needed.

The preferred embodiments of the invention are described in detail below, by example only, with reference to the accompanying drawings, wherein:

Figure 1 is a side view of an embodiment of the invention mounted on a rod; and

Figures 2a and 2b show another embodiment of the invention, Fig. 2a being a side view and Fig. 2b being a plan view.

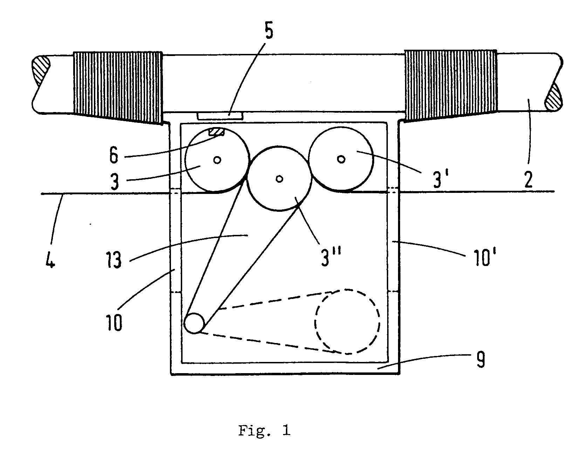

In Figure 1, the bite indicator 1 is mounted on the fishing rod 2. The indicator includes a frame 9 which can be permanently mounted on the rod 2, for example by conventional whipping. The indicator comprises a pulley wheel 3 whose axis of rotation is perpendicular to the rod and, in this embodiment, extends out of the plane of the paper. The fishing line 4 is diverted around a portion of the pulley wheel 3. In addition to pulley wheel 3, there is a second rotatable member, a roller 3″ on an arm 13. The arm 13 is pivotally mounted on the bottom of the frame 9. There is also a further wheel 3′ a small distance along the rod from pulley wheel 3. When the bite indicator is in its operating mode, the roller 3″ rests in the space between the wheels 3 and 3′ so that the line is diverted around them, in particular around the pulley wheel 3.

A reed switch 5 is mounted in the rod 2 and is operably connected to the wheel 3 by means of a magnet 6 embedded at one or more points on the circumference of the wheel. The switch 5 forms part of an electrical circuit which also included a visual indicator (not shown), for example a light emitting diode.

When a fish takes the bait on the end of the line, the bite is indicated by means of the line 4 turning the wheel 3 which operates the switch 5 which, in turn, activates the LED.

The switch may also activate an audible alarm in addition to or instead of the visual indicator. The number of magnets around the wheel determines the number of "bleeps" or "flashes" per revolution of the wheel. The rate of occurrence of these signals obviously indicates to the user the rate at which the fish is taking line.

When the angler wishes to cast out, the arm 13 is simply pivoted downwardly to temporarily lock into a position along the base of the frame 9, as indicated by the dotted lines. In this position of the arm 13, the line can freely run through the rings 10,10′. When the angler has successfully cast out, he simply moves the arm back up to its position between the wheels 3, 3′.

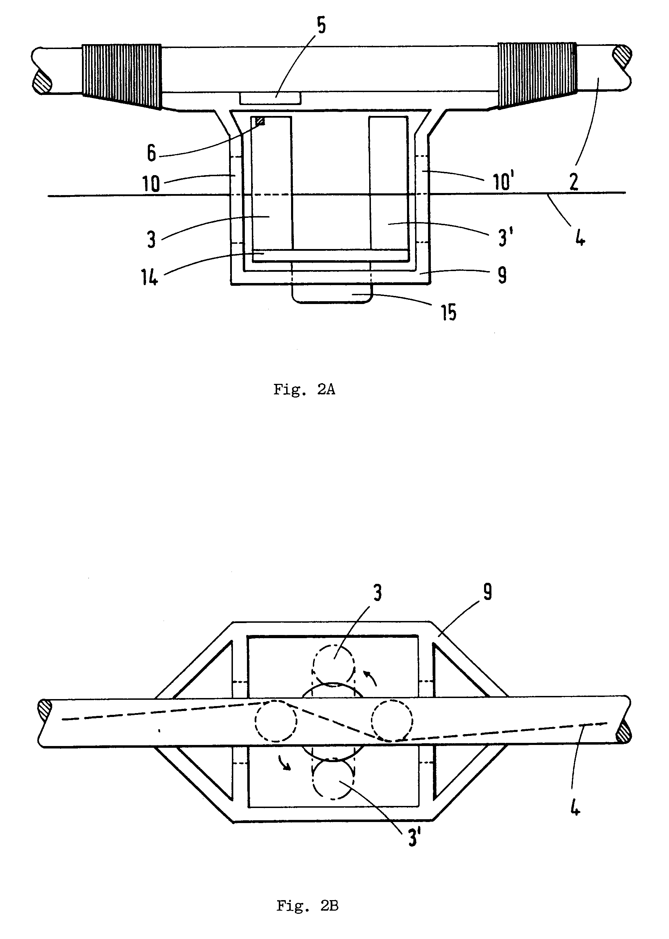

In the embodiment of Fig. 2, there are a pair of rotatable members 3, 3′ in the form of cylindrical rollers whose axes of rotation are perpendicular to the rod 2 and extend in the plane of the paper. The line 4 is therefore diverted past the two rollers in a flattened S-shape, as shown by the dashed lines in Fig 2b. At the upper end of one roller 3, near its circumference, there is fitted the magnet 6 which triggers the switch 5.

The two rollers 3, 3′ are mounted on a cage 14 which itself is pivotally mounted within the frame 9. When the angler wishes to cast out, the cage 14 and rollers are rotated, by means of a clutch 15 on the base of the frame 9, so that the rollers assume a position either side of the rod 2 so that the line can run freely through the rings 10,10′. this position of the rollers is shown in Figure 2b.

In all embodiments, the main circuitry including the optical/audio indicators, may be mounted in the butt of the rod, the wires from the switch running along inside the rod or on its surface. Alternatively, the circuitry and indicators may be included in a remote unit, connection being made between contact points on the rod and a rod rest, for example.

## Claims

1. A bite indicator which is capable of being mounted on a fishing rod, the indicator (1) comprising at least one rotatable member (3) whose axis of rotation is, in use, transverse to the rod (2) and around which, in use, a fishing line (4) at least partially passes, a switch (5) operably connected to the rotatable member (3) and an indicator (8) which can be activated by the switch, movement of the line (4) causing rotation of the rotatable member (3,3′, 3″) which rotation operates the switch which in turn activates the indicator (8) to indicate the existence of a bite, characterised in that there are at least two rotatable members (3, 3′, 3″) and in that at least one of said rotatable members (3″,3, 3′) is movable between the position in which the line passes at least partially around the rotatable members and a position in which the line can run freely through the indicator in order to allow ease of casting.

2. A bite indicator according to claim 1, wherein there are three rotatable members (3,3′,3″), wherein the axes of the rotatable members are substantially horizontal in use, with the rod horizontal and the indicator therebelow, and wherein one rotatable (3″) member is a roller mounted at the end of a pivotable arm (13).

3. A bite indicator according to claim 1, comprising a pair of rotatable members (3,3′) whose axes are substantially vertical in use, with the rod horizontal and the indicator therebelow, and wherein the pair of rotatable members (3,3′) is pivotable so that each rotatable member (3,3′) can assume a position to the side of the line (4).

## Patentansprüche

1. Bißanzeiger, der in der Lage ist, auf einer Angelrute befestigt zu werden, mit mindestens einem drehbaren Element (3), dessen Drehachse im Gebrauch quer zu der Angelrute (2) verläuft und um das beim Gebrauch eine Angelschnur (4) mindestens teilweise herumgeht, mit einem mit dem drehbaren Element (3) wirkverbundenen Schalter (5) sowie mit einem Anzeiger (8), der von dem Schalter aktiviert werden kann, wobei die Bewegung der Schnur (4) eine Drehung des drehbaren Elementes (3, 3′, 3″) veranlaßt, welche Drehung den Schalter betätigt, der seinerseits den Anzeiger (8) aktiviert zum Anzeigen des Vorhandenseins eines Bisses, dadurch gekennzeichnet, daß es mindestens zwei drehbare Elemente (3, 3′, 3″) gibt und daß mindestens eines der drehbaren Elemente (3″, 3, 3′) zwischen der Position, in der die Schnur mindestens teilweise um die drehbaren Elemente herumgeht, und einer Position bewegbar ist, in der die Schnur frei durch den Anzeiger laufen kann, um die Leichtigkeit des Wurfes zu ermöglichen.

2. Bißanzeiger nach Anspruch 1, bei dem es drei drehbare Elemente (3, 3′, 3″) gibt, wobei die Achsen der drehbaren Elemente im Gebrauch mit der horizonatlen Angelrute und dem Anzeiger darunter im wesentlichen horizontal verlaufen, und bei dem ein drehbares Element (3″) eine Rolle ist, die an dem Ende eines schwenkbaren Armes (13) angeordnet ist.

3. Bißanzeiger nach Anspruch 1, enthaltend ein Paar drehbarer Elemente (3, 3′), deren Achsen im Gebrauch bei horizontaler Angelrute und dem darunter angeordneten Anzeiger im wesentlichen senkrecht verlaufen und bei dem das Paar drehbarer Elemente (3, 3′) schwenkbar ist, so daß jedes drehbare Element (3, 3′) eine Position zur Seite der Angelschnur (4) einnehmen kann.

## Revendications

1. Indicateur de touche pouvant être monté sur une canne à pêche, l'indicateur (1) comprenant au moins un élément tournant (3) dont l'axe de rotation est, en fonctionnement, transversal par rapport à la canne (2) et autour duquel, en fonctionnement, une ligne de pêche (4) passe au moins partiellement, un commutateur (5) connecté de manière opérationnelle à l'élément tournant (3) et un indicateur (8) qui peut être activé par le commutateur, tout mouvement de la ligne (4) provoquant la rotation de l'élément tournant (3, 3′, 3″), cette rotation actionnant le commutateur qui à son tour active l'indicateur (8) pour indiquer l'existence d'une touche, caractérisé en ce qu'il y a au moins deux éléments tournants (3, 3′, 3″) et en ce qu'au moins un desdits éléments tournants (3″, 3, 3′) est mobile entre la position dans laquelle la ligne passe au moins partiellement autour des éléments tournants et une position dans laquelle la ligne peut se déplacer librement au travers de l'indicateur afin de faciliter le lancer.

2. Indicateur de touche selon la revendication 1, dans lequel il y a trois éléments tournants (3, 3′, 3″), dans lequel les axes des éléments tournants sont sensiblement horizontaux en fonctionnement, la canne étant horizontale et l'indicateur étant au-dessous, et dans lequel un élément tournant (3″) est un galet monté au niveau de l'extrémité d'un bras pivotant (13).

    3. Indicateur de touche selon la revendication 1, comprenant deux éléments tournants (3, 3′) dont les axes sont sensiblement verticaux en fonctionnement, la canne étant horizontale et l'indicateur étant au-dessous, et dans lequel les deux éléments tournants (3, 3′) peuvent pivoter de telle sorte que chaque élément tournant (3, 3′) puisse prendre une position sur le côté de la ligne (4).

Fig. 1

Fig. 2A

Fig. 2B